# EUROPÄISCHE PATENTSCHRIFT

(11) **EP 1 198 677 B1**
(45) Veröffentlichungstag und Bekanntmachung des Hinweises auf die Patenterteilung: **10.12.2003**
(21) Anmeldenummer: 00943932.4
(22) Anmeldetag: 29.06.2000
(51) Int. Cl.: F16D 3/40

(54) **KREUZGELENK MIT EINER LINEARFÜHRUNG**
UNIVERSAL JOINT WITH A LINEAR GUIDE
JOINT UNIVERSEL A GUIDE LINEAIRE

(30) Priorität: 23.07.1999 DE 19934643
(43) Veröffentlichungstag der Anmeldung: 24.04.2002
(73) Patentinhaber: INA-Schaeffler KG, 91074 Herzogenaurach (DE)
(72) Erfinder: LUNZ, Erich, D-91475 Lonnerstadt (DE); SCHIMSCHAL, Herbert, D-96049 Bamberg (DE)
(86) Internationale Anmeldenummer: EP0006048
(87) Internationale Veröffentlichungsnummer: WO01007795

(56) Entgegenhaltungen:
- US-A- 3 716 731
- US-A- 5 715 729
- DUERSCHMIED F: "BAUGRUPPEN FUER PARALLELE KINEMATIKEN" WERKSTATT UND BETRIEB,DE,CARL HANSER VERLAG. MUNCHEN, Bd. 132, Nr. 5, Mai 1999 (1999-05), Seiten 33-34,36,38, XP000824362 ISSN: 0043-2792

## Beschreibung

### Gebiet der Erfindung

Die Erfindung betrifft ein Kreuzgelenk mit einer Linearführung, die einen Führungswagen und eine Führungsschiene enthält, sowie mit einem Zapfenkreuz, dessen vier Lagerzapfen paarweise längs zweier rechtwinklig zueinander verlaufender Achsen angeordnet und in Anschlußkonstruktionen drehbar gelagert sind, wovon eine Anschlußkonstruktion für zwei längs einer Achse angeordnete Lagerzapfen als klauenförmige Gabel ausgebildet ist, und wobei die Anschlußkonstruktion für die beiden längs der anderen Achse angeordneten Lagerzapfen als Führungswagen der Linearführung ausgebildet ist, der an der Führungsschiene längsverschieblich abgestützt ist.

### Hintergrund der Erfindung

Ein derartiges Kreuzgelenk ist beispielsweise aus dem Dokument DE 16 25 791 B vorbekannt. Die paarweise angeordneten Zapfen sind über je zwei Wälzlager von je einer Gabel aufgenommen. Solche auch als Kardangelenke bezeichnete Kreuzgelenke werden bevorzugt in der Kraftfahrzeugindustrie für die Übertragung von Drehmomenten eingesetzt.

Nachteilig dabei ist, daß diese Kreuzgelenke für spezielle Anwendungsfälle im Werkzeugmaschinenbau nicht geeignet sind. Beim Auftreten von Zug- oder Druckkräften weisen sie eine zu geringe Steifigkeit auf. Das bedeutet, daß das Zapfenkreuz durch Zug- oder Druckkräfte deformiert werden kann, so daß ein Werkzeugträger nicht immer mit der erforderlichen Präzision geführt wird.

Aus dem Dokument US 5 715 729 A ist eine Werkzeugmaschine mit Kreuzgelenken der eingangs genannten Art bekannt. Diese können dort verwendet werden, um jeweils einen Führungswagen mit einem Stab zu verbinden, auf welchen eine lineare Bewegung übertragen werden soll. Zum Antrieb des Führungswagens längs einer Führungsschiene dient jeweils ein Kugelschraubtrieb. Das Kreuzgelenk ist hier jedoch dadurch mit dem Führungswagen verbunden, daß es an dessen Außenseite angesetzt ist.

Das Dokument US 3 716 731 A zeigt einen Führungswagen einer Linearführung, der an einer Führungsschiene über mehrere endlose Reihen von Wälzkörpern abgestützt ist.

### Zusammenfassung der Erfindung

Der Erfindung liegt die Aufgabe zugrunde, ein Kreuzgelenk hoher Steifigkeit, das sich für den linear verschiebbaren Einbau in einer Werkzeugmaschine eignet und einen möglichst großen Schwenkwinkel zuläßt, in dem Führungswagen zu integrieren.

Diese Aufgabe wird erfindungsgemäß dadurch gelöst, daß der Führungswagen zwei voneinander beabstandete Vorsprünge aufweist, die durch ein mit einer halbkreisförmigen Ausnehmung versehenes Mittelteil miteinander verbunden sind und Bohrungen aufweisen, in weichen das Zapfenkreuz mit seinen Lagerzapfen schwenkbar gelagert ist, wobei das Zapfenkreuz ein Mittelteil aufweist, das kreisförmig ausgestaltet und in der Ausnehmung des Führungswagens angeordnet ist. Auf diese Weise läßt sich das Kreuzgelenk für Bearbeitungsmaschinen und Handhabungssysteme verwenden, bei welchen die Kombination einer linearen Führung und einer gelenkigen Führung beispielsweise eines Werkzeuges ermöglicht werden soll. Derartige Maschinen sind unter der Bezeichnung "parallele Kinematiken" bekannt. Bei einer solchen Kombination einer Linearführung mit einem Gelenk ist das Gelenk in dem Führungswagen integriert. Außer dem Baugrößenvorteil ergeben sich dadurch die Vorteile eines definierten Mittelpunktes des Gelenkes zu der Linearführung und einer höheren Steifigkeit.

Der Führungswagen kann über Wälzkörper an der Führungsschiene längsverschieblich abgestützt sein. Außerdem kann die Linearführung für die Längsverschiebung des Führungswagens relativ zu der Führungsschiene einen Antrieb aufweisen. Hier ist ein mit einem elektromagnetischen Feld arbeitender berührungsloser Linearmotor denkbar. Der Antrieb kann aber auch mit einer Gewindespindel, beispielsweise als Rollen- oder Kugelgewindespindel ausgeführt werden, weiche parallel zu der Führungsschiene verlaufend an dieser axial gehalten und drehbar gelagert sowie von einer in dem Führungswagen befestigten Gewindemutter umgeben ist.

### Kurze Beschreibung der Zeichnung

Ausführungsbeispiele der Erfindung sind in der Zeichnung dargestellt und werden im folgenden näher beschrieben. Es zeigen:
- Figur 1: ein erfindungsgemäßes Kreuzgelenk in einem eine gemeinsame Achse zweier Lagerzapfen enthaltenden Längsschnitt;
- Figur 2: das Kreuzgelenk in einem die andere gemeinsame Achse zweier weiterer Lagerzapfen enthaltenden Längsschnitt gemäß Linie II-II der Figur 1;
- Figur 3: ein Kreuzgelenk gemäß Figur 1, welches zusätzlich mit einem Antrieb in der Form eines Linearmotors versehen ist;
- Figur 4: ein Kreuzgelenk gemäß Figur 1, welches zusätzlich mit einem Antrieb in der Form einer von einer Gewindemutter umgebenen Gewindespindel versehen ist;
- Figur 5: eine schematische Darstellung einer Werkzeugmaschine.

### Ausführliche Beschreibung der Zeichnung

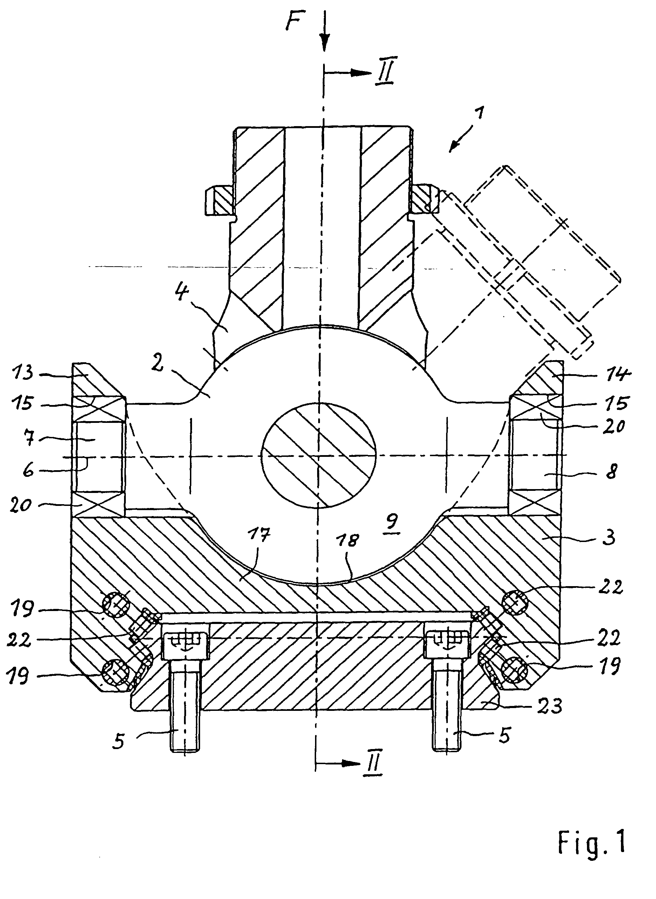

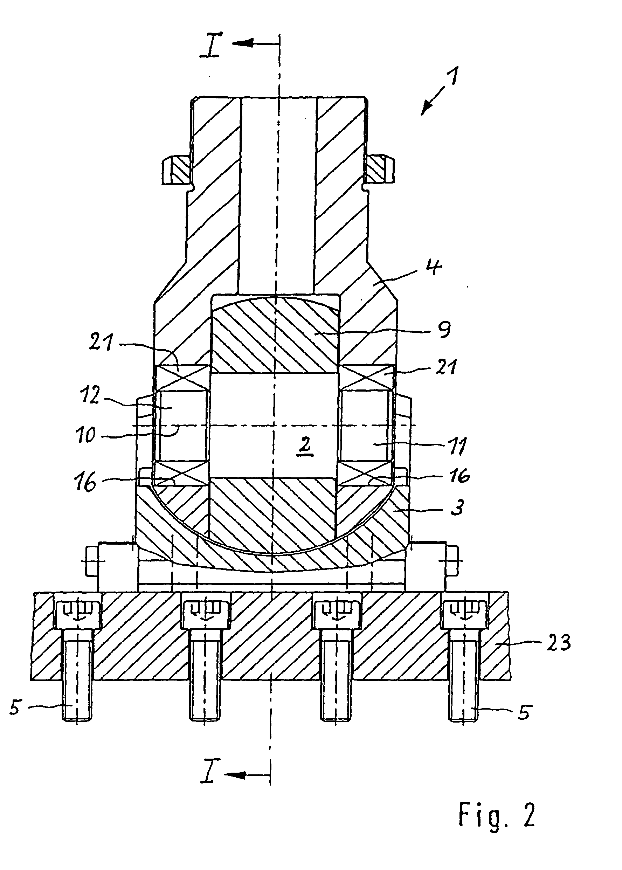

Ein in den Figuren 1 und 2 dargestelltes erfindungsgemäßes Kreuzgelenk 1 setzt sich aus drei Hauptbestandteilen zusammen, nämlich einem Zapfenkreuz 2, einer ersten Anschlußkonstruktion, die als Führungswagen 3 einer Linearführung ausgebildet ist, und einer zweiten Anschlußkonstruktion, die die Form einer klauenförmigen Gabel 4 aufweist.

Das Zapfenkreuz 2 enthält ein erstes Paar von mit gemeinsamer Achse 6 hintereinander angeordneten Lagerzapfen 7 und 8. Rechtwinklig zur Achse 6 des ersten Zapfenpaares erstreckt sich entlang einer Achse 10 ein zweites Zapfenpaar mit hintereinander angeordneten koaxialen Lagerzapfen 11 und 12. Zwischen den Lagerzapfen 7 und 8 weist das Zapfenkreuz 2 ein Mittelteil 9 auf, das kreisförmig ausgestaltet ist.

Der als erste Anschlußkonstruktion ausgebildete Führungswagen 3 besitzt zwei voneinander beabstandete Vorsprünge 13 und 14, die durch ein Mittelteil 17 miteinander verbunden sind, welches eine halbkreisförmige Ausnehmung 18 aufweist. Der Führungswagen 3 ist über Wälzkörper 22 an einer Führungsschiene 23 längsverschieblich abgestützt. Mit Befestigungsschrauben 5 kann die Führungsschiene 23 an einer weiteren Anschlußkonstruktion, beispielsweise an dem Gestell einer Werkzeugmaschine, festgelegt werden. Die Wälzkörper 22 sind als Rollen ausgebildet, welche in vier endlosen Umläufen in dem Führungswagen 3 gehalten sind. Jeder Umlauf weist einen Tragbereich mit an der Führungsschiene 23 abrollenden Wälzkörpern 22, einen in einer Bohrung 19 des Führungswagens 3 befindlichen Rücklaufbereich und zwei Umlenkbereiche auf, die jeweils den Tragbereich mit dem Rücklaufbereich verbinden.

Das Zapfenkreuz 2 ist mit seinen Lagerzapfen 7 und 8 über je ein Wälzlager 20 in Bohrungen 15 der Vorsprünge 13 und 14 schwenkbar gelagert. Außerdem ist das Zapfenkreuz 2 mit seinen Lagerzapfen 11 und 12 über zwei Wälzlager 21 in Bohrungen 16 der Gabel 4 aufgenommen, wobei die Gabel beidseitig in Richtung der Vorsprünge 13 und 14 schwenkbar ist. Sie besteht aus zwei voneinander in einem Abstand angeordneten, nicht näher bezeichneten Teilstücken, die das Mittelteil 9 des Zapfenkreuzes 2 umschließen und mit einem Kompaktteil vereint sind. Dabei läßt sich der Kompaktteil aus einer senkrechten Neutralstellung in Figur 1 um die Achse 10 um einen Schwenkwinkel von je 45° in Richtung des Vorsprunges 13 oder 14 verschwenken. Der gesamte Schwenkwinkel der Gabel 4 beträgt somit 90°.

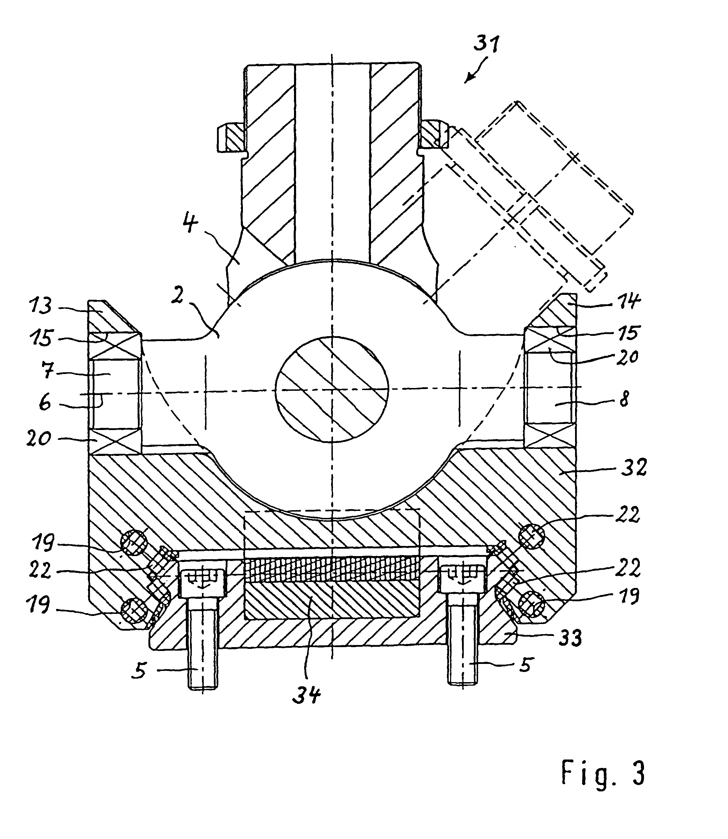

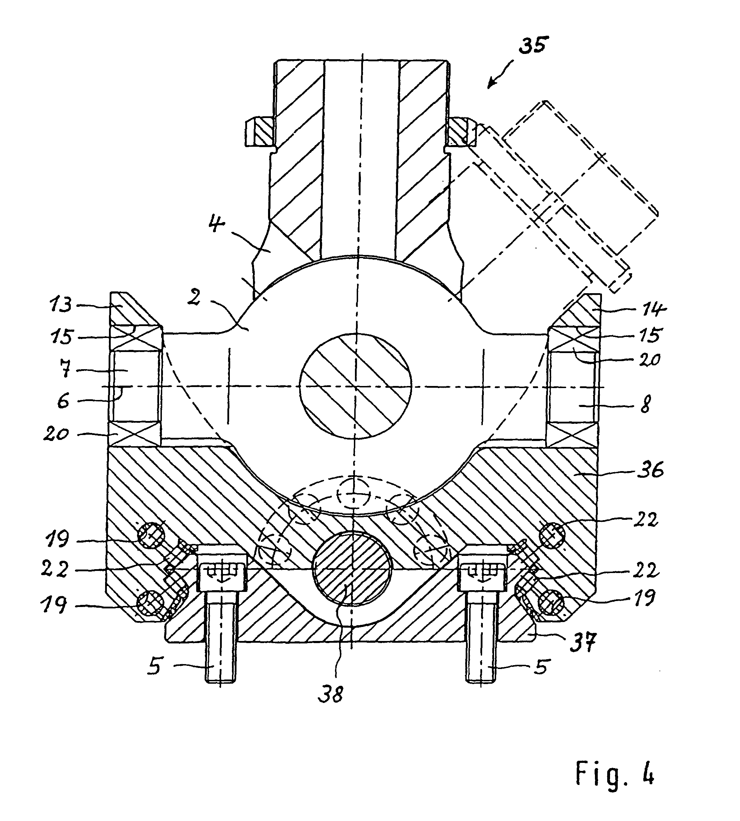

Die in den Figuren 3 und 4 dargestellten erfindungsgemäßen Kreuzgelenke sind grundsätzlich ebenso aufgebaut, wie das Kreuzgelenk 1 gemäß den Figuren 1 und 2, so daß für gleiche Teile dieselben Bezugszahlen verwendet sind. Diese Kreuzgelenke weisen zusätzlich Antriebe auf, mit welchen jeweils der Führungswagen längs der Führungsschiene verschoben werden kann.

Figur 3 zeigt ein Kreuzgelenk 31, zwischen dessen Führungswagen 32 und Führungsschiene 33 als Antrieb ein Linearmotor 34 eingebaut ist. Dieser arbeitet mit einem elektromagnetischen Feld, wobei im Antriebsbereich eine mechanische Berührung zwischen der Führungsschiene 33 und dem Führungswagen 32 nicht erfolgt.

Figur 4 zeigt ein Kreuzgelenk 35, dessen Führungswagen 36 relativ zu der Führungsschiene 37 von einer Gewindespindel 38 bewegt wird, die an der Führungsschiene 37 axial gehalten und drehbar gelagert ist. Sie ist von einer an dem Führungswagen 36 befestigten Gewindemutter umgeben, wobei dieser Gewindetrieb mit einem reinen Schraubgewinde oder mit einer Rollen- oder Kugelgewindespindel ausgeführt sein kann.

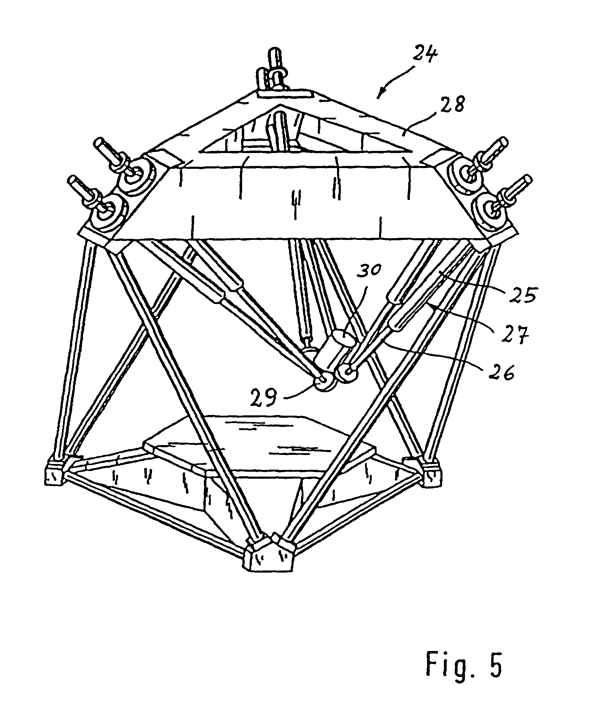

Die Führungsschiene 23, 33 bzw. 37 des erfindungsgemäßen Kreuzgelenkes 1, 31 bzw. 35 kann an einer Werkzeugmaschine angeschraubt werden, bei welcher eine Werkzeugaufnahme in jede gewünschte Position im Raum bewegt werden kann. Figur 5 zeigt eine solche, jedoch ohne Linearführungen für Kreuzgelenke ausgebildete Werkzeugmaschine 24. Diese ist mit mehreren je aus ineinander eingesteckten Rohren 25, 26 gebildeten Teleskoparmen 27 versehen, welche jeweils mit einem Ende an einem Rahmen 28 und mit dem anderen Ende an einer Werkzeugaufnahme 29 angelenkt sind. Die Werkzeugaufnahme 29 ist mit einem nicht näher dargestellten Werkzeug versehen, das von einem Motor 30 angetrieben wird. Durch Ein- bzw. Ausfahren eines oder mehrerer Teleskoparme 27 läßt sich die Werkzeugaufnahme 29 in jede gewünschte Position im Raum bewegen.

Bei einer entsprechend angepaßten Werkzeugmaschine können die erfindungsgemäßen Kreuzgelenke auf einer Linearschiene geführt werden, die mittels der Befestigungsschrauben 5 am Rahmen sicher fixiert wird. Durch die Verschiebbarkeit auf der Linearachse kann auf Teleskoparme verzichtet werden; die Streben können somit als Stäbe mit festen Längen ausgeführt werden. Durch die Steifigkeit der Kreuzgelenke, also durch die spezielle Ausbildung beispielsweise des Kreuzgelenkes 1 mit einem Mittelteil 9, sind die Kreuzgelenke sowohl in Zug- als auch in Druckrichtung über die klauenförmige Gabel 4 besonders beanspruchbar, ohne daß unerwünschte Biegungen auftreten.

### Bezugszahlen

- 1: Kreuzgelenk
- 2: Zapfenkreuz
- 3: Führungswagen
- 4: klauenförmige Gabel
- 5: Befestigungsschraube
- 6: Achse
- 7: Lagerzapfen
- 8: Lagerzapfen
- 9: Mittelteil
- 10: Achse
- 11: Lagerzapfen
- 12: Lagerzapfen
- 13: Vorsprung
- 14: Vorsprung
- 15: Bohrung
- 16: Bohrung
- 17: Mittelteil
- 18: Ausnehmung
- 19: Bohrung
- 20: Wälzlager
- 21: Wälzlager
- 22: Wälzkörper
- 23: Führungsschiene
- 24: Werkzeugmaschine
- 25: Rohr
- 26: Rohr
- 27: Teleskoparm
- 28: Rahmen
- 29: Werkzeugaufnahme
- 30: Motor
- 31: Kreuzgelenk
- 32: Führungswagen
- 33: Führungsschiene
- 34: Linearmotor
- 35: Kreuzgelenk
- 36: Führungswagen
- 37: Führungsschiene
- 38: Gewindespindel
- F: Kraftkomponente

## Patentansprüche

1. Kreuzgelenk (1, 31, 35) mit einer Linearführung, die einen Führungswagen (3, 32, 36) und eine Führungsschiene (23, 33, 37) enthält, sowie mit einem Zapfenkreuz (2), dessen vier Lagerzapfen (7, 8, 11, 12) paarweise längs zweier rechtwinklig zueinander verlaufender Achsen (6, 10) angeordnet und in Anschlußkonstruktionen drehbar gelagert sind, wovon eine Anschlußkonstruktion für zwei längs einer Achse (10) angeordnete Lagerzapfen (11, 12) als klauenförmige Gabel (4) ausgebildet ist, und wobei die Anschlußkonstruktion für die beiden längs der anderen Achse (6) angeordneten Lagerzapfen (7, 8) als Führungswagen (3, 32, 36) der Linearführung ausgebildet ist, der an der Führungsschiene (23, 33, 37) längsverschieblich abgestützt ist, **dadurch gekennzeichnet, dass** der Führungswagen (3, 32, 36) zwei voneinander beabstandete Vorsprünge (13, 14) aufweist, die durch ein mit einer halbkreisförmigen Ausnehmung (18) versehenes Mittelteil (17) miteinander verbunden sind und Bohrungen (15) aufweisen, in welchen das Zapfenkreuz (2) mit seinen Lagerzapfen (7, 8) schwenkbar gelagert ist, wobei das Zapfenkreuz (2) ein Mittelteil (9) aufweist, das kreisförmig ausgestaltet und in der Ausnehmung (18) des Führungswagens (3, 32, 36) angeordnet ist.

2. Kreuzgelenk mit einer Linearführung nach Anspruch 1, **dadurch gekennzeichnet, daß** die Linearführung für die Längsverschiebung des Führungswagens (3, 32, 36) relativ zu der Führungsschiene (23, 33, 37) einen Antrieb aufweist.

3. Kreuzgelenk mit einer Linearführung nach Anspruch 2, **dadurch gekennzeichnet, daß** der Antrieb für den Führungswagen (32) als mit einem elektromagnetischen Feld arbeitender berührungsloser Linearmotor (34) ausgebildet ist.

4. Kreuzgelenk mit einer Linearführung nach Anspruch 2, **dadurch gekennzeichnet, daß** der Antrieb für den Führungswagen (36) eine Gewindespindel (38) enthält, welche parallel zu der Führungsschiene (37) verlaufend an dieser axial gehalten und drehbar gelagert sowie von einer in dem Führungswagen (36) befestigten Gewindemutter umgeben ist.

5. Kreuzgelenk mit einer Linearführung nach Anspruch 1, **dadurch gekennzeichnet, daß** der Führungswagen (3, 32, 36) über Wälzkörper (22) an der Führungsschiene (23, 33, 37) längsverschieblich abgestützt ist.

6. Kreuzgelenk mit einer Linearführung nach Anspruch 5, **dadurch gekennzeichnet, daß** in dem Führungswagen (3, 32, 36) mehrere endlose Reihen von umlaufenden Wälzkörpern (22) angeordnet sind.

7. Kreuzgelenk mit einer Linearführung nach Anspruch 4, **dadurch gekennzeichnet, daß** die von der Gewindemutter des Führungswagens (36) umgebene Gewindespindel (38) als Rollen- oder Kugelgewindespindel ausgeführt ist.

## Claims

1. Universal joint (1, 31, 35) comprising a linear guide that contains a guide carriage (3, 32, 36) and a guide rail (23, 33, 37), said universal joint also comprising a cardan spider (2), the four bearing journals (7, 8, 11, 12) of which are arranged in pairs along two axes (6, 10) extending at right angles to each other and are mounted for rotation in connecting structures, one of these structure for two bearing journals (11, 12) arranged along one (10) of the axes being configured as a claw-shaped fork (4), and the connecting structure for the two bearing journals (7, 8) arranged along the other axis (6) being configured as a guide carriage (3, 32, 36) of the linear guide, which guide carriage is supported for longitudinal displacement on the guide rail (23, 33, 37), **characterised in that** the guide carriage (3, 32, 36) comprises two spaced apart projections (13, 14) that are connected to each other by a central portion (17) provided with a semi-circular recess (18), which projections comprise bores (15) in which the cardan spider (2) is pivoted with its bearing journals (7, 8), the cardan spider (2) comprising a central portion (9) of circular shape that is arranged in the recess (18) of the guide carriage (3, 32, 36).

2. Universal joint with a linear guide according to claim 1, **characterised in that**, for the longitudinal displacement of the guide carriage (3, 32, 36) relative to the guide rail (23, 33, 37), the linear guide comprises a drive.

3. Universal joint with a linear guide according to claim 2, **characterised in that** the drive for the guide carriage (32) is configured as a contactless linear motor (34) acting through an electromagnetic field.

4. Universal joint with a linear guide according to claim 2, **characterised in that** the drive for the guide carriage (36) comprises a threaded spindle (38) that extends parallel to the guide rail (37) on which it is axially retained and mounted for rotation while being surrounded by a threaded nut that is fixed in the guide carriage (36).

5. Universal joint with a linear guide according to claim 1, **characterised in that** the guide carriage (3, 32, 36) is supported through rolling elements (22) for longitudinal displacement on the guide rail (23, 33, 37).

6. Universal joint with a linear guide according to claim 5, **characterised in that** several endless rows of circulating rolling elements (22) are arranged in the guide carriage (3, 32, 36).

7. Universal joint with a linear guide according to claim 4, **characterised in that** the threaded spindle (38) that is surrounded by the threaded nut of the guide carriage (36) is configured as a roller or a ball threaded spindle.

## Revendications

1. Joint universel (1, 31, 35) ayant un guide linéaire qui comprend un chariot de guidage (3, 32, 36) et un rail de guidage (23, 33, 37) ainsi qu'un croisillon (2) dont les quatre tourillons (7, 8, 11, 12) sont agencés par paires le long de deux axes (6, 10) qui s'étendent à angle droit, l'un de l'autre, lesdits tourillons étant montés en rotation dans des structures de raccordement, l'une de ces structures de raccordement pour deux tourillons (11, 12) agencés le long de l'un (10) des axes étant configurée en fourchette à griffes (4), et l'autre de ces structures de raccordement pour les deux tourillons (7, 8) qui sont agencés le long de l'autre axe (6) étant configurée sous la forme d'un chariot de guidage (3, 32, 36) du guide linéaire qui est supporté en déplacement longitudinal sur le rail de guidage (23, 33, 37), **caractérisé en ce que** le chariot de guidage (3, 32, 36) comprend deux saillies (13, 14) à l'écart, l'une de l'autre, qui sont reliées, l'une à l'autre, par une partie médiane (17) munie d'un évidement semi-circulaire (18), et qui comprennent des alésages (15) dans lesquels le croisillon (2) est monté en pivotement par ses tourillons (7, 8), ledit croisillon (2) comprenant une partie médiane (9) de forme circulaire qui est agencé dans l'évidement (18) du chariot de guidage (3, 32, 36).

2. Joint universel ayant un guide linéaire selon la revendication 1, **caractérisé en ce que,** pour le déplacement longitudinal du chariot de guidage (3, 32, 36) par rapport au rail de guidage (23, 33, 37), le guide linéaire comprend une commande.

3. Joint universel ayant un guide linéaire selon la revendication 2, **caractérisé en ce que** la commande pour le chariot de guidage (32) est configurée sous la forme d'un moteur électrique linéaire sans contact qui agit par un champ électromagnétique.

4. Joint universel ayant un guide linéaire selon la revendication 2, **caractérisé en ce que** la commande pour le chariot de guidage (36) comprend une broche filetée (38) qui s'étend parallèlement au rail de guidage (37) et est retenue axialement et montée en rotation sur celui-ci en étant entourée par un écrou taraudé qui est fixé dans le chariot de guidage (36).

5. Joint universel ayant un guide linéaire selon la revendication 1, **caractérisé en ce que** le chariot de guidage (3, 32, 36) est supporté en déplacement longitudinal sur le rail de guidage (23, 33, 37) par l'intermédiaire de corps roulants (22).

6. Joint universel ayant un guide linéaire selon la revendication 5, **caractérisé en ce que** plusieurs rangées sans fin de corps roulants (22) en circulation sont agencées dans le chariot de guidage (3, 32, 36).

7. Joint universel ayant guide linéaire selon la revendication 4, **caractérisé en ce que** la broche filetée (38) qui est entourée par l'écrou taraudé du chariot de guidage (36) est configurée sous la forme d'une broche filetée à rouleaux ou à billes.
